**Europäisches Patentamt**

**European Patent Office**

**Office européen des brevets**

(19)

(11) Veröffentlichungsnummer : **0 080 665 B2**

(12) ## NEUE EUROPÄISCHE PATENTSCHRIFT

(45) Veröffentlichungstag der neuen Patentschrift :
**05.02.92 Patentblatt 92/06**

(51) Int. Cl.$^5$ : **B29C 47/00,** B29C 47/40, B29C 47/32

(21) Anmeldenummer : **82110682.0**

(22) Anmeldetag : **19.11.82**

(54) **Verfahren zur Herstellung eines polymeren, reaktiven, flächigen Gebildes mit hoher Dickengenauigkeit und -konstanz.**

(30) Priorität : **28.11.81 DE 3147325**

(43) Veröffentlichungstag der Anmeldung :
**08.06.83 Patentblatt 83/23**

(45) Bekanntmachung des Hinweises auf die Patenterteilung :
**22.10.86 Patentblatt 86/43**

(45) Bekanntmachung des Hinweises auf die Entscheidung über den Einspruch :
**05.02.92 Patentblatt 92/06**

(84) Benannte Vertragsstaaten :
**BE CH DE FR GB IT LI NL SE**

(56) Entgegenhaltungen :
**EP-A- 0 076 473
DE-A- 2 138 582
DE-A- 2 215 090
GB-A- 1 144 863
GB-A- 2 033 241
US-A- 3 862 265
US-A- 4 155 690
KUNSTSTOFFE, Band 71, Nr. 10, Oktober 1981, Seiten 623-636, MÜNCHEN, (DE). H. HERRMANN: "Schneckenmaschinen für das Aufbereiten von Kunststoffen".
Kunststoffe 71(5), 266-271(1981), "Aufbereiten von technischen Kunststoffen"
Pactec IV Conference, Society of Plastics Engineers, Inc. Costa Mesa, California, 30.01.-02.02.79, "Advances in Pigmentation Compounding"
Werner und Pfleiderer,"Compounding Extruders for Plastics",1976
Werner und Pfleiderer, "ZSK Twin-Srew Extrusion Systems for Compounding, Filling, Reinforcing and Finishing Polymer Materials", USA Jan. 1981
Ullmanns Encyclopädie der technischen Chemie, 4. Auflage, Band 15, Weinheim 1978
Shell Chemicals Company, Techn. Bulletin SC: 65-75, "Kraton* G Thermoplastic Rubber for Sealants, Adhesives and related Materials", USA October 1975
I. Skeist "Handbook of Adhesives", 2nd edition,1977, Van Nostrand Reinhold Company, NY,S. 317-318**

(56) Entgegenhaltungen :
**SPE Journal, Band 21, Heft 5, Mai 1965, S.E.-Perlberg "The Case for Calenders" S. 64-69
Der Plastverarbeiter, Band 30, Heft 7,1979, Edenkoben, W.A. Neitzer "Basic Facts about the Manufacture of Formable Thermoplastic Film and Sheet Material",S. 383-389
A. Reinhart,Konstr. Elemente Meth., 14 (1977) S. 64-68
Lendle E., Masch.Markt, 85 (1979),61, S. 1204-05
K.Koster,Leichttransporttechnik, Vulkan Verlag, Essen,1984,S.126, Bild 92(Anm.:Nicht vorveröffentlicht)**

(73) Patentinhaber : **BASF Aktiengesellschaft Carl-Bosch-Strasse 38 W-6700 Ludwigshafen (DE)**

(72) Erfinder : **Eckell, Albrecht, Dr. Paul-Klee-Strasse 2 W-6710 Frankenthal (DE)**
Erfinder : **Pohlemann, Heinz, Dr. Hardenburgstrasse 25 W-6703 Limburgerhof (DE)**
Erfinder : **Taubitz, Christof, Dr. In der Dreispitz 15 W-6706 Wachenheim (DE)**
Erfinder : **Schlemmer, Lothar Duisbergstrasse 1 A W-6701 Maxdorf (DE)**
Erfinder : **Bleckmann, Gerhard Giselherstrasse 9 W-6840 Lampertheim (DE)**

## Beschreibung

Die vorliegende Erfindung betrifft ein Verfahren zur Herstellung eines bei Raumtemperatur festen, reaktiven flächigen Gebildes mit hoher Dickengenauigkeit und -konstanz aus einer Mischung von einem thermoplastisch verarbeitbaren Polymeren, einer niedrigviskosen ethylenisch ungesättigten Verbindung als Vernetzungspromotor, einem Vernetzungshilfsmittel sowie gegebenenfalls weiteren festen und/oder flüssigen Zusatzstoffen durch homogenes Vermischen der Bestandteile des reaktiven flächigen Gebildes, Extrudieren der Mischung und Formen eines flächigen Gebildes mit der gewünschten Dicke.

In der Technik werden in verschiedenen Bereichen dimensionsgenaue Formgegenstände, wie flächige Gebilde, aus Polymeren eingesetzt, die eine hohe Dickenkonstanz aufweisen und unter den jeweiligen Anwendungsbedingungen, wie z.B. bei mechanischer oder chemischer Beanspruchung, auch dimensionshaltig sein müssen. Beispiele hierfür sind u.a. Zurichtefolien; Folien oder Platten als Unterlagen zum Dickenausgleich, etwa für Stanz- oder Druckplatten; Walzenbeschichtungen, wie z.B. für Gegendruckzylinder bei Druckverfahren oder für Walzwerke mit hohen Rundlaufgenauigkeiten, etwa Einzugswalzen; Endlosbänder für Flüssigbeschichtungen von Substraten, etwa zum Gießen von Filmen; oder Reliefformen, wie Druckschichten von Druckplatten, etc.

Zur Herstellung von dickengenauen und dimensionshaltigen Filmen, Folien oder Platten kann man in einfacher Weise von entsprechenden reaktiven flächigen Gebilden auf Basis von Polymeren ausgehen und diesen duch chemische Reaktion, Rss/IG wie Härten oder Vernetzen, die notwendige Dimensionshaltigkeit und beispielsweise Lösungsmittelbeständigkeit verleihen. Es besteht somit in vielen Bereichen der Technik ein Bedarf an reaktiven flächigen Gebilden mit hoher Dickengenauigkeit und -konstanz.

Es ist bereits bekannt, reaktive flächige Gebilde aus einem thermoplastischen Polymeren, ungesättigten Verbindungen, Vernetzungshilfsmitteln sowie gegebenenfalls weiteren Zusatzstoffen herzustellen, indem man die Komponenten in einer Mischvorrichtung, z.B. einem Innenmischer, einem Walzenmischer oder einer Mühle unter Aufschmelzen des Polymeren homogen vermischt und diese Mischungen in einem separaten Arbeitsgang durch Extrusion, Kalandrieren oder Plattenpressen zu den flächigen Gebilden formt (vgl. DE-OS 21 38 582 und DE-OS 22 15 090). Sofern das Formen der flächigen Gebilde durch Extrusion beschrieben ist, wurden hierbei bislang Einwellenextruder eingesetzt, um zu flächigen Gebilden mit hoher Dickengenauigkeit und -konstanz zu gelangen. Nachteilig bei diesen bekannten Methoden ist die diskontinuierliche Arbeitsweise, bei der die Herstellung der Mischung und das Formen der flächigen Gebilde in separaten Schritten erfolgt. Die Mischungen müssen dabei dosierbar gemacht werden, um sie weiterverarbeiten zu können. Ferner kann die zweimalige thermische Belastung des Materials nicht nur zu einer Veränderung der Mischungsbestandteile (Polymer, ungesättigte Verbindung, Vernetzungshilfsmittel) führen, sondern es kann dadurch auch zu störender Gelbildung und Inhomogenitäten kommen.

In der DE-OS 21 14 767 wird für die Herstellung von photopolymeren Druckplatten aus Polyvinylalkohol, einem photopolymerisierbaren Monomeren sowie einem Photoinitiator ein Verfahren beschrieben, bei dem man zunächst die einzelnen Komponenten durch Lösen in Wasser mischt, diese wäßrige Lösung dann über eine Breitschlitzdüse extrudiert und das extrudierte flächige Gebilde zur Schichtdickeneinstellung durch einen Zweiwalzenstuhl führt. Bei dieser Arbeitsmethode, bei der das Mischen der Komponenten in Lösung erfolgt, wird zwar die doppelte thermische Belastung der Materialien vermieden, jedoch muß nach der Extrusion und Bildung des flächenförmigen Gebildes das Lösungsmittel in einem weiteren Verfahrensschritt durch Trocknen bei erhöhter Temperatur entfernt werden. Neben den Nachteilen, die das diskontinuierliche Arbeiten als solches mit sich bringt, kommt in diesem Fall der hohe Energieaufwand für die Trocknung erschwerend hinzu. Nähere Angaben über die Art des verwendeten Extruders für die Bildung des flächenförmigen Gebildes werden in dieser Druckschrift nicht gemacht.

Ferner ist es z.B. aus der DE-OS 26 54 029 bekannt, zur kontinuierlichen Herstellung von vernetzten Polyolefinschaumstoffen die Mischungskomponenten (Olefinpolymerisat, organisches Treibmittel, Vernetzungsmittel, Vernetzungspromoten etc.) in einem Zweiwellenextruder homogen zu vermischen und als reaktives Gemisch zu extrudieren. In diesem Fall kommt es jedoch nicht darauf an, daß das Extrudat eine hohe Dickengenauigkeit und -konstanz hat, da die Formgebung in einer nachfolgenden Schäumkammer unter Aufschäumen der reaktiven Mischung erfolgt.

Aufgabe der vorliegenden Erfindung ist es, ein Verfahren zur Herstellung von reaktiven flächigen Gebilden auf Basis von thermoplastisch verarbeitbaren Polymeren aufzuzeigen, welches, von den Ausgangssstoffen ausgehend, kontinuierlich arbeitet, die Nachteile der bekannten diskontinuierlichen Verfahren überwindet, produktschonend arbeitet und es ermöglicht, in einfacher und wirtschaftlicher Weise bei Raumtemperatur feste reaktive flächige Gebilde mit sehr Darüber hinaus ist vom Stand der Technik ein Verfahren zur Herstellung eines bei Raumtemperatur festen, reaktiven flächigen Gebildes mit hoher Dickengenauigkeit und -konstanz aus einer Mischung von einem thermoplastisch verarbeitbaren Polymeren, einer niedrigviskosen ethylenisch unge-

2

sättigten Verbindung als Vernetzungspromotor, einem Vernetzungshilfsmittel sowie gegebenenfalls weiteren festen und/oder flüssigen Zusatzstoffen durch homogenes Vermischen der das reaktive flächige Gebilde bildenden bestandteile, Extrudieren der Mischung und Formen des flächigen Gebildes mit der gewünschten Dicke durch Kalandrieren bekannt, bei dem man zunächst in einem selbstreinigenden Mehrschneckenextruder, in Produktflußrichtung gesehen, in einer ersten Zone das thermoplastisch verarbeitbare Polymere und gegebenenfalls weitere, insbesondere feste Mischungsbestandteile bei einer Temperatur unterhalb der Schmelztemperatur des thermoplastisch verarbeitbaren Polymeren einspeist und fördert, dann in einer zweiten Zone, in der das thermoplastisch verarbeitbare Polymere aufgeschmolzen wird, zumindest die Hauptmenge der flüssigen, niedrigviskosen sowie alle gegebenenfalls weiteren Mischungsbestandteile zugibt und alle Mischungsbestandteile homogen vermischt, die homogene Schmelze in einer nachfolgenden Entgasungszone von störenden flüchtigen bestandteilen befreit und danach die entgaste Schmelze über eine breitschlitzdüse aus dem Extruder austrägt, anschließend direkt das extrudierte flächige Gebilde zur Einstellung der gewünschten Dicke mit einer Temperatur durch den Spalt eines ersten Walzenpaares führt, bei der das flächige Gebilde unter den Verarbeitungsbedingungen zumindest teilweise irreversibel verformbar ist, wobei man das durch die breitschlitzdüse extrudierte flächige Gebilde dem ersten Walzenpaar mit einer solchen Geschwindigkeit zuführt, daß sich im Walzenspalt ein Massewulst bildet, wonach man das aus dem Walzenspalt austretende reaktive flächige Gebilde mittels Luftrakel von oben und von unten kühlt (air knife cooling) und das gekühlte reaktive flächige Gebilde einem zweiten Walzenpaar zuführt, das mit derselben Geschwindigkeit wie das erste gedreht wird und hinter dem das den Walzenspalt verlassende reaktive flächige Gebilde mit aktinischem Licht belichtet wird. Nachteilig ist hier, daß die Verwendung zweier Walzenpaare in den reaktiven flächigen Gebilden Unebenheiten, sogenannte "shatter marks", hervorrufen kann.

Aufgabe der vorliegenden Erfindung ist es, dieses bekannte Verfahren zur Herstellung von reaktiven flächigen Gebilden auf Basis von thermoplastisch verarbeitbaren Polymeren weiter zu verbessern, damit es, von den Ausgangsstoffen ausgehend, kontinuierlich und produktschonend arbeitet und damit die zu erzeugenden reaktiven flächigen Gebilde nach dem Verlassen des Walzenspalts des ersten Walzenpaares bereits ihre endgültigen Dimensionen mit der erfolderlichen Genauigkeit aufweise, ohne daß die reaktiven flächigen Gebilde nachträglich noch einmal formgebend bearbeitet, z.B. kalandriert, werden müssen, so daß das Verfahren es ermöglicht, in einfacher und wirtschaftlicher Weise bei Raumtemperatur feste reaktie flächige Gebilde mit sehr großer Homogenität und hoher Dickengenauigkeit und -konstanz in besonders einfacher Weise herzustellen.

Es wurde gefunden, daß diese Aufgabe gelöst wird, wenn man die Düsenlippen der Breitschlitzdüse separat beheizt, ein bestimmtes Dickenverhältnis zwischen dem extrudierten flächigen Gebilde und dem hieraus herzustellenden festen reaktiven flächigen Gebilde einstellt, das den Walzenspalt des ersten Walzenpaares verlassende reaktive flächige Gebilde mit einem umlaufenden perforierten Band, auf welches das reaktive flächige Gebilde über einen Träger oder eine mitgeführt Folie mit Hilfe eines Vakuumkastens aufgezogen wird, wegfördert und das reaktive flächige Gebilde unmittelbar nach dem Verlassen des Walzenspaltes oder beim Abtransport mit dem perforierten Band durch vollflächiges Bestrahlen mit aktinischem Licht nur eu einem Teil seiner Dicke oder vollständig vernetzt.

Gegenstand der Erfindung ist demzufolge ein Verfahren zur Herstellung eines bei Raumtemperatur festen, reaktiven flächigen Gebildes mit hoher Dickengenauigkeit und -konstanz aus einer Mischung von einem thermoplastisch verarbeitbaren Polymeren, einer niedrigviskosen ethylenisch ungesättigten Verbindung als Vernetzungspromotor, einem Vernetzungshilfsmittel sowie gegebenenfalls weiteren festen und/oder flüssigen Zusatzstoffen durch homogenes Vermischen der das reaktive flächige Gebilde bildenden Bestandteile, Extrudieren der Mischung und Formen des flächigen Gebildes mit der gewünschten Dicke durch Kalandrieren, bei dem man zunächst in einem selbstreinigenden Mehrschneckenextruder - in Produktflußrichtung gesehen - in einer ersten Zone das thermoplastisch verarbeitbare Polymere und gegebenenfalls weitere, insbesondere feste Mischungsbestandteile bei einer Temperatur unterhalb der Schmelztemperatur des thermoplastisch verarbeitbaren Polymeren einspeist und fördert, dann in einer zweiten Zone, in der das thermoplastisch verarbeitbare Polymere aufgeschmolzen wird, die flüssigen, niedrigviskosen sowie alle gegebenenfalls weiteren Mischungsbestandteile zugibt und alle Mischungsbestandteile homogen vermischt, die homogene Schmelze in einer nachfolgenden Entgasungszone von störenden flüchtigen Bestandteilen befreit und danach die entgaste Schmelze über eine Breitschlitzdüse aus dem Extruder austrägt, anschließend direkt das extrudierte flächige Gebilde zur Einstellung der gewünschten Dicke mit einer Temperatur zwischen dem Saplt eines Walzenpaares durchführt, bei der das flächige Gebilde unter den Verarbeitungsbedingungen zumindest teilweise irreversibel verformbar ist, wobei man das durch die Breitschlitzdüse extrudierte flächige Gebilde dem Walzenpaar mit einer solchen Geschwindigkeit zuführt, daß sich im Walzenspalt ein Massewulst bildet, und wobei das Verfahren dadurch gekennzeichnet ist, daß

a) die Düsenlippen der Breitschlitzdüse separat beheizt und 10 bis 60°C wärmer als die Düsenmitte sind,

b) das extrudierte flächige Gebilde 10 bis 40 % dicker als das hieraus herzustellende feste reaktive flächige

3

Gebilde ist,

c) man das den Walzenspalt verlassende reaktive flächige Gebilde mit einem umlaufenden perforierten Band, auf welches das reaktive flächige Gebilde über einen Träger oder eine untere mitgeführte Folie mit Hilfe eines Vakuumkastens aufgezogen wird, wegführt und daß man

d) man das reaktive flächige Gebilde unmittelbar nach dem Verlassen des Walzenspalts oder beim Abtransport mit dem perforierten Band durch vollflächiges Bestrahlen mit aktinischem Licht nur zu einem Teil seiner Dicke oder vollständig vernetzt

Auch wenn es an und für sich bekannt war, zur Herstellung eines bei Raumtemperatur festen reaktiven flächigen Gebildes aus einer Mischung von einem thermoplastisch verarbeitbaren Polymeren, einer niedrigviskosen ethylenisch ungesättigten Verbindung als Vernetzungspromotor, einem Vernetzungshilfsmittel sowie gegebenenfalls weiteren festen und/oder flüssigen Zusatzstoffen, die betreffenden Bestandteile der herzustellenden festen reaktiven Gebildes homogen zu vermischen, zu extrudieren und zu kalandrieren, wobei man zunächst in einem selbstreinigenden Mehrschneckenextruder, in Produktflußrichtung gesehen, in einer ersten Zone des thermoplastisch verarbeitbare Polymere und gegebenenfalls weitere, insbesondere feste Mischungsbestandteile bei einer Temperatur unterhalb der Schmelztemperatur des thermoplastisch verarbeitbaren Polymeren einspeiste und förderte, dann in einer zweiten Zone, in der das thermoplastisch verarbeitbare Polymere aufgeschmolzen wurde, zumindest die Hauptmenge der flüssigen, niedrigviskosen sowie alle gegebenenfalls weiteren Mischungsbestandteile zugab und alle Mischungsbestandteile homogen vermischte, die homogene Schmelze in einer nachfolgenden Entgasungszone von störenden flüchtigen Bestandteilen befreite und danach die entgaste Schmelze über eine Breitschlitzdüse aus dem Extruder austrug, anschließend direkt das extrudierte flächige Gebilde zur Einstellung der gewünschten Dicke mit einer Temperatur durch den Spalt eines Walzenpaares führte, bei der das flächige Gebilde unter den Verarbeitungsbedingungen zumindest teilweise irreversibel verformbar war, wobei man das durch die Breitschlitzdüse extrudierte flächige Gebilde dem Walzenpaar mit einer solchen Geschwindigkeit zuführte, daß sich im Walzenspalt ein Massewulst bildete, wonach man das aus dem Walzenspalt austretende reaktive flächige Gebilde mittels Luftrakel von oben und von unten kühlte (air knife cooling) und das gekühlte reaktive flächige Gebilde einen weiteren Walzenpaar zuführte, das mit derselben Geschwindigkeit wie das erste gedreht wurde und hinter dem erst das den Walzenspalt verlassende reaktive flächige Gebilde mit aktinischem Licht belichtet wurde, war es überraschend und im Hinblick auf den Stand der Technik nicht vorhersehbar, daß sich mit Hilfe des erfindungsgemäßen Verfahrens das feste reaktive flächige Gebilde in einfacher Weise mit hoher Dickengenauigkeit und -konstanz herstellen läßt und bereits nach dem Verlassen des Walzenspalts des ersten Walzenpaares bereits seine endgültige Dimension mit der erforderlichen Genauigkeit hat, ohne daß es noch einmal nachträglich formgebend bearbeitet werden muß, so daß auf das zweite Walzenpaar verzichtet werden kann. Dadurch wird auch die Bildung von Unebenheiten oder sogenannten "shatter marks" in den reaktiven flächigen Gebilden, welche bei der Verwendung zweier Walzenpaare auftreten kann, von vornherein vermieden.

Hierbei war es im Hinblick auf den Stand der Technik gleichfalls nicht vorhersehbar, daß sich der Verfahrenserfolg auch gerade wegen der separaten Beheizung der Düsenlippen der Breitschlitzdüse und der Einstellung eines bestimmten Dickenverhältnisses zwischen dem extrudierten flächigen Gebilde und dem hieraus herzustellenden festen reaktiven flächigen Gebilde einstellt.

Unter reaktiven flächigen Gebilden werden im Rahmen dieser Erfindung Filme, Folien, Platten, Bänder oder dgl. verstanden, die unter bestimmten Bedingungen, beispielsweise bei Erwärmen auf hohe Temperaturen oder bei Bestrahlung mit energiereichen Strahlen (beispeilsweise aktinischem Licht oder Elektonenstrahlen), zu solchen chemischen Reaktionen, insbesondere Vernetzungsreaktionen, fähig sind, die die Dimensionsstabilität und -haltigkeit der flächigen Gebilde sowie ihre Beständigkeit gegenüber mechanischer und chemischer Beanspruchung (z.B. durch Lösungsmittel) entscheidend verbessern. Zu den reaktiven flächigen Gebilden gehören dabei auch Laminate und Mehrschichtenelemente, die mindestens eine Schicht der oben gekennzeichneten Art enthalten.

Zur Herstellung der reaktiven flächigen Gebilde geht man erfindungsgemäß von einem thermoplastisch verarbeitbaren Polymeren, einem im allgemeinen niedrigviskosen Vernetzungspromotor, einem Vernetzungshilfsmittel sowie gegebenenfalls weiteren festen und/oder flüssigen Zusatzstoffen aus.

Die thermoplastisch verarbeitbaren, festen Polymeren stellen das Basismaterial für die reaktiven flächigen Gebilde dar. Sie werden nach Art und Menge so ausgewählt, daß die reaktive Mischung und somit das reaktive flächige Gebilde bei Raumtemperatur fest ist. Die thermoplastisch verarbeitbaren Polymeren werden im allgemeinen in Mengen von 50 bis 90 Gew.%, bezogen auf alle Mischungsbestandteile, eingesetzt. In speziellen Anwendungsfällen kann jedoch der Anteil der thermoplastisch verarbeitbaren Polymeren auch niedriger liegen und beispielsweise nur 35 oder 40 Gew.% betragen. Beispielsweise können bei lichtempfindlichen reaktiven flächigen Gebilden, wie sie in Mehrschichtenelementen für die Herstellung von Reliefformen oder Reliefdruckplatten eingesetzt werden, die thermoplastisch verarbeitbaren Polymeren in Mengen von 40 bis 90 Gew.%,

bezogen auf alle Bestandteile der reaktiven Schicht, eingesetzt werden. Beispiele für thermoplastisch verarbeitbare Polymere, die in dem erfindungsgemäßen Verfahren allein oder im Gemisch miteinander eingesetzt werden können, sind Polyethylen, Polypropylen, Polyvinylchlorid, Styrolpolymerisate, insbesondere Styrol-Diencopolymerisate, Butadien- und/oder Isopren-Polymerisate, Butadien/Acrylnitril-Copolymerisate (Nitril-Kautschuke), elastomere Polyurethane, Polyamide, Polyimide, Polyamidimide, (Meth)acrylatpolymerisate, Vinylchlorid/Vinylacetat-Copolymere, Vinylidenchlorid-polymerisate, Vinylester- insbesondere Vinylacetat- oder Vinylpropionat-Polymerisate, Polyvinylalkohole u.a.. Je nach Art der eingesetzten thermoplastisch verarbeitbaren Polymeren sind die für diese Polymeren an sich bekannten, allgemeinen Verarbeitungsbedingungen, wie z.B. Temperaturbelastbarkeit, Plastifizierung, Hilfsmittelzusätze etc., zu berücksichtigen. Bevorzugt werden als thermoplastisch verarbeitbare Polymere neben den Polyurethanen und Vinylalkoholpolymeren die elastomeren, kautschukartigen Polymerisate eingesetzt, wie insbesondere die Homopolymerisate des Butadiens und Isoprens, die Copolymerisate des Butadiens und Isoprens untereinander sowie mit anderen copolymerisierbaren Monomeren, z.B. Nitril-Kautschuke, wie Butadien/Acrylnitril-Copolymerisate mit 15 bis 45 Gew.% an einpolymerisiertem Acrylnitril, carboxylgruppentragende Nitril-Kautschuke, vinylchloridhaltige Nitril-Kautschuke und die Mehrblock-Copolymerisate aus Styrol, Butadien und/oder Isopren, wie AB-Zweiblockcopolymerisate, ABA-Dreiblockcopolymerisate, ABC-Dreiblockcopolymerisate, wie sie in der DE-OS 29 42 183 beschrieben sind, Sternblockcopolymerisate, teil- oder vollständig hydrierte Blockcopolymerisate der genannten Art.

Als Vernetzungspromotoren in den reaktiven flächigen Gebilden dienen niedermolekulare, im allgemeinen niedrigviskose, flüssige organische Verbindungen, die ein oder mehrere polymerisierbare ethylenisch ungesättigte Doppelbindungen aufweisen. Diese Vernetzungspromotoren sollen der vorzugsweise radikalisch initiierten Polymerisation zugänglich sein, so daß sie unmittelbar zur Ausbildung von Vernetzungen zwischen den hochmolekularen Polymerketten beitragen. Vorzugsweise werden als Vernetzungspromotoren solche organischen Verbindungen eingesetzt, die zwei oder mehr polymerisierbare ethylenisch ungesättigte Doppelbindungen aufweisen. Die Vernetzungspromotoren können dabei allein oder auch in Mischung miteinander eingesetzt werden. So sind beispielsweise in vielen Fällen Mischungen aus Verbindungen mit zwei oder mehreren ethylenisch ungesättigten Doppelbindungen von Vorteil; gleicherweise können aber auch Mischungen von organischen Verbindungen mit mehreren, vorzugsweise zwei, ethylenisch ungesättigten Doppelbindungen mit solchen Verbindungen, die nur eine ethylenisch ungesättigte Doppelbindung im Molekül aufweisen, eingesetzt werden. Art und Menge der Vernetzungspromotoren richtet sich einerseits nach dem eingesetzten thermoplastisch verarbeitbaren Polymeren sowie andererseits der erwünschten Reaktivität der flächigen Gebilde, d.h. dem möglichen erzielbaren Vernetzungsgrad. Im allgemeinen werden die Vernetzungspromotoren in Mengen von mindestens 5 Gew.%, vorzugsweise in Mengen von 8 bis 40 Gew.%, bezogen auf alle Mischungsbestandteile des reaktiven flächigen Gemisches, eingesetzt. In den Mischungen aus monoethylenisch ungesättigten und mehrfach ethylenisch ungesättigten organischen Verbindungen liegt der Anteil der monoethylenisch ungesättigten organischen Verbindungen üblicherweise im Bereich von 10 bis 50 Gew.%, bezogen auf die Summe der als Vernetzungspromotoren eingesetzten niedermolekularen organischen Verbindungen. Bevorzugt werden solche niedermolekularen ethylenisch ungesättigten Verbindungen als Vernetzungspromotoren eingesetzt, die mit dem thermoplastisch verarbeitbaren Polymeren verträglich sind, insbesonder wenn an das reaktive flächige Gebilde oder die daraus hergestellten dimensionsstabilen flächigen Gebilde hohe Anforderungen hinsichtlich der optischen Eigenschaften, wie z.B. Klarheit und Transparenz, gestellt werden. Durch die Verarbeitung im Extruder bedingt, sollen die als Vernetzungspromotoren eingesetzten ethylenisch ungesättigten Verbindungen im allgemeinen einen Siedepunkt über 100°C bei Atmosphärendruck besitzen.

Beispiele für derartige Vernetzungspromotoren sind insbesondere die Acrylate und Methacrylate von monofunktionellen oder polyfunktionellen Alkoholen, wie z.B. die Di- und Poly-(meth)acrylate von Ethylenglykol, Propylenglykol, Butandiol, Hexandiol, Diethylenglykol, Triethylenglykol, Tetraethylenglykol, Polyethylenglykolen mit Molekulargewichten im Bereich von 200 bis 500, Trimethylolpropan, Pentaerythrit und anderen. Ebenso geeignet sind die entsprechenden Monoacrylate und/oder Monomethacrylate der genannten Diole und Polyole oder von Alkanolen mit 1 bis 8 C-Atomen, z.B. Methanol, Ethanol, Propanol, Butanol, 2-Ethyl-hexanol u.a. Eine weitere Gruppe von ethylenisch ungesättigten Verbindungen, die insbesondere als Vernetzungspromotoren bei Einsatz von Polyamiden als thermoplastisch verarbeitbaren Polymeren geeignet sind, sind die (Meth)acrylamide sowie Derivate des Acrylamids und Meth-acrylamids. Geeignet sind ferner auch Polyester- oder Polyurethanacrylate.

Bei den Vernetzungshilfsmitteln handelt es sich insbesondere um Substanzen, die unter dem Einfluß von Wärme und/oder aktinischem Licht in Radikale zerfallen, welche die Polymerisation von ethylenisch ungesättigten Verbindungen zu initiieren vermögen. Als Vernetzungshilsmittel eignen sich einerseits Peroxide, die unter den Verarbeitungs-bedingungen zur Herstellung der reaktiven flächigen Gebilde keine nennenswerte Zersetzung erleiden. Geeignete übliche Peroxide sind beispielsweise: tert.-Butylmaleinat, 2,5-Dimethylhexan-2,5-diperbenzoat, tert.-Butylperacetat, tert.-Butylperbenzoat, 2,2-Bis-(butylperoxi)-butan, Dicumylperoxid, tert.-Butylcumylperoxid, 2,5-Dimethyl-2,5--bis-(tert.-butylperoxi)-hexan, Ditert.-butylperoxid, tert.-Butylhydroperoxid, Cumolhydroperoxid und 3,5,5-Trimethylcyclohexanonperketal. Als Vernetzungshilfsmittel können in gleicher Weise die bekannten Photopolymerisations-initiatoren eingesetzt werden, die unter Einwirkung von aktinischen Licht, insbesondere einer Wellenlänge von 300 bis 420 nm, in Radikale zerfallen und die bei den Verarbeitungstemperaturen zur Herstellung des flächigen Gebildes ebenfalls hinreichend thermisch stabil sind. Zu den geeigneten Photopolymerisationsinitiatoren gehören besonders Benzoin und Benzoin-Derivate, wie $\alpha$-Methylbenzoin, $\alpha$-Methylolbenzoin, Benzoinmethylether, Benzoinethylether, Benzoinisopropylether, sowie die Ether des $\alpha$-Methylbenzoins und $\alpha$-Methylolbenzoins; 1,2-Diketone, wie z.b. Diacetyl, Benzophenon, Benzil oder auch die Derivate solcher Diketone, z.B. Benzildimethylketal, Benzilethylenketal, oder Benzilmethylethylketal, sowie Verbindungen der Anthrachinonreihe und insbesondere Acylphosphinoxid-Verbindungen des Typs, wie sie z.B. in der DE-OS 29 09 993 beschrieben sind. In der Regel beträgt die eingesetzte Menge an Vernetzungshilfsmittel 0,05 bis 5 Gew.%, bezogen auf die Summe aller Bestandteile des reaktiven flächigen Gebildes.

Darüberhinaus können zur Herstellung der reaktiven flächigen Gebilde weitere übliche feste und/oder flüssige Zusatzstoffe eingesetzt werden, wie z.B. Antioxidatien, Stabilisatoren, Inhibitoren gegen eine unerwünschte frühzeitige thermische Polymerisation, Farbstoffe, Weichmacher, Extrusionshilfsmittel, etc. Die Art der weiteren Zusatzstoffe richtet sich in erster Linie nach den mitverwendeten thermoplastisch verarbeitbaren Polymeren sowie dem angestrebten Eigenschaftsbild und Verwendungszweck des reaktiven flächigen Gebildes. Die weiteren Zusatzstoffe werden in den für diese Stoffe bekannten und üblichen Mangen eingesetzt. Im allgemeinen wird die Gesamtmenge dieser wieteren Zusatzstoffe 40 Gew.%, bezogen auf die Summe aller Bestandteile des reaktiven flächigen Gebildes, nicht überschreiten. Für die Herstellung von dimensionsstabilen und -haltigen weichelastischen Schichten, wie Unterschichten für Druckklischees, Trägerschichten für Druckplatten oder auch Druckschichten selbst, aber auch Dichtungen und anderen Formteilen, kann man beispeilsweise vorteilhaft von reaktiven flächigen Gebilden ausgehen, die aus einem Gemisch von wenigstens etwa 45 Gew.% eines elastomeren kautschukartigen Polymerisats der oben genannten Art, 5 bis 20 Gew.% der Vernetzungspromotoren, 0,05 bis 4 Gew.% der Vernetzungshilfsmittel und 15 bis 40 Gew%., insbesondere 20 bis 35 Gew.% eines verträglichen Weichmachers sowie bis zu 5 Gew.% an weiteren Zusatzstoffen gebildet worden sind.

Zur Herstellung der reaktiven flächigen Gebilde werden die einzelnen Bestandteile unter Aufschmelzen des thermoplastisch verarbeitbaren Polymeren miteinander vermischt und die Mischung sofort zu dem flächigen Gebilde geformt. Wesentlich ist dabei, daß das Mischen der Komponenten trotz der sehr großen Viskositätsunterschiede zwischen der Polymerschmelze und den niedrigviskosen flüssigen Mischungsbestandteilen, insbesondere den Vernetzungspromotoren, äußerst homogen und gleichzeitig sehr produktschonend erfolgen muß, damit keine Schädigung oder vorzeitige Reaktion der Mischung erfolgt. Des weiteren muß die erhaltene homogene Mischung zu einem reaktiven flächigen Gebilde mit sehr hoher Dickengenauigkeit und -konstanz geformt werden. Nach dem erfindungsgemäßen Verfahren wird hierzu in einem selbstreinigenden Mehrschneckenextruder gearbeitet.

Als Mehrschneckenextruder eignen sich hierbei die in der Kunststoffverarbeitung an sich bekannten mehrwelligen, insbesondere zweiwelligen Schneckenmashinen, vorzugsweise 2- oder 3-gängige, zweiwellige, selbstreinigende Knetscheiben-Schneckenpressen. Die Extruder besitzen mehrere Einzugsöffnungen für das Einspeisen der Mischungsbestandteile, mindestens eine Entgasungsöffnung sowie eine mit einer Breitschlitzdüse versehene Austragsöffnung und sind zur optimalen Verfahrensführung im allgemeinen zonenweise temperierbar. Die Schnecken sind, wie erwähnt, selbstreinigend, vorzugsweise gleichsinnig drehend und in ihrer Gestaltung den jeweiligen Arbeitsbedingungen in den einzelnen Abschnitten des Extruders angepaßt. Die Wahl der jeweils geeigneten Schnecken bzw. Schneckenelemente für eine optimale Verfahrensführung ist dem kunststoffverarbeitenden Fachmann geläufig.

Erfindungsgemäß erfolgt das Einspeisen der einzelnen Bestandteile in den Extruder, das Mischen, Homogenisieren, Entgasen und Formen in aufeinander folgenden Zonen des Extruders. Die nachfolgend näher beschriebenen einzelnen Maßnahmen sind dabei stets in Produktflußrichtung gesehen. Zunächst werden in einer ersten Zone das oder die thermoplastisch verarbeitbaren Polymeren eingespeist und in eine zweite Zone gefördert. Die Schnecken in dieser ersten Zone sind daher förderwirksam ausgebildet, wobei die erste Zone eine Länge vom 2- bis 10-fachen, vorzugsweise vom 3- bis 6-fachen des Schneckendurchmessers aufweist. Die erste Zone kann beheizt und mit Stickstoff beaufschlagt werden, vorzugsweise ist sie jedoch nicht geheizt, gegebenenfalls sogar gekühlt. Auf alle Fälle wird in dieser ersten Zone bei einer Temperatur unterhalb der Schmelztemperatur der thermoplastisch verarbeitbaren Polymeren gefahren, bei der ein Klumpen und Kleben des Materials vermieden wird. In diese erste Zone können zusätzlich zu den thermoplastisch verarbeitbaren Polymeren gegebenenfalls auch noch weitere, insbesondere feste Mischungsbestandteile eingespeist werden, wobei hierfür insbesondere andere polymere Zusatz- und/oder Hilfsstoffe in Betracht kommen.

Aus dieser ersten Zone werden das oder die thermoplastisch verarbeitbaren Polymeren sowie die gegebenenfalls eingespeisten weiteren Zusatzstoffe in eine zweite Zone gefördert, in der die flüssigen, niedrigviskosen Mischungsbestandteile sowie alle weiteren Zusatz- und/oder Hilfsstoffe zudosiert und alle Mischungsbestandteile unter Aufschmelzen der thermoplastisch verarbeitbaren Polymeren homogen miteinander vermischt werden. Die Maßnahme, daß die flüssigen Mischungsbestandteile in der zweiten Zone des Extruders zudosiert werden sollen, bedeutet, daß die überwiegende Menge dieser flüssigen Bestandteile an dieser Stelle in den Extruder eingespeist wird. Dabei können geringe Mengen an flüssigen Bestandteilen, beispielsweise auch in der ersten Zone des Extruders zugegeben werden. Vorzugsweise wird jedoch die Gesamtmenge der flüssigen Bestandteile in der zweiten Zone zudosiert. Dabei ist es auch möglich, die flüssigen Mischungsbestandteile an einer oder mehreren Stellen, vorzugsweise jedoch an einer oder zwei Stellen, in der zweiten Zone des Extruders zuzugeben. Die Einspritzstellen des überwiegenden Teils der flüssigen Mischungsbestandteile sollen dabei in den ersten zwei Dritteln der zweiten Zone liegen. In die zweite Zone werden neben den flüssigen Vernetzungspromotoren auch die restlichen weiteren Zusatz- und/oder Hilfsstoffe eingespeist. Dies kann bei festen Zusatzstoffen, wie z.B. Vernetzungshilfsmitteln, Farbstoffen oder dgl., vorteilhaft in Form einer Lösung dieser Zusatzstoffe in den flüssigen Mischungsbestandteilen geschehen. Sofern für die Herstellung der reaktiven flächigen Gebilde Weichmacher mitverwendet werden, werden diese in aller Regel ebenfalls in der zweiten Zone zudosiert. Da die Mischungsbestandteile in der zweiten Zone des Extruders aufgeheizt werden, können die flüssigen Mischungsbestandteile vor dem Eindosieren bereits vorerwärmt sein, damit der Mischung beschleunigt Wärme zugeführt wird.

Die Temperatur in der zweiten Zone des Extruders wird so gehalten, daß sie zum Aufschmelzen des thermoplastisch verarbeitbaren Polymeren sowie zum homogenen Vermischen der einzelnen Bestandteile hinreichend ist, ohen daß hierbei eine thermische Schädigung der Produkte erfolgt. Im allgemeinen wird diese zweite Zone auf Temperaturen (Heiztemperatur des Extruders) zwischen 100 und 220°C, vorzugsweise zwischen 150 bis 170°C aufgeheizt und die Temperatur so geführt, daß die Temperatur der Schmelze etwa 5 bis 15°C über der Erweichungstemperatur des Gemisches liegt. Die Länge dieser zweiten Zone beträgt im allgemeinen das 10- bis 50-fache, vorzugsweise das 12- bis 36-fache, des Schneckendurchmessers. Die Schnecken im hinteren Teil der zweiten Zone sind dabei so ausgebildet, daß man einen optimalen Misch- und Homogenisierungseffekt erhält. Beispielsweise können die zum Mischen und Homogenisieren bekannten und üblichen Knetscheiben-Schneckenelemente eingesetzt werden, wodurch eine intensive Quervermischung und gute Dispergierwirkung durch Erzeugung von Scherkraftfeldern unterschiedlicher Stärke bewirkt wird. Es hat sich als zweckmäßig erwiesen, mit Schergeschwindigkeiten von 200 bis 1800 sec$^{-1}$, vorzugsweise von 350 bis 850 sec$^{-1}$ zu arbeiten. Die zweite Zone kann auch in mehreren Abschnitten unterschiedlicher Temperatur temperiert werden, so daß beispielweise die Temperatur in dem vorderen Teil, in dem die flüssigen Bestandteile eingespeist werden, niedriger liegt als in dem hinteren Teil, in dem das Homogenisieren erfolgt. Außerdem kann diese zweite Zone einen Entgasungsstutzen tragen, um bereits einen Teil der flüchtigen Anteile oder Hilfsstoffe, sofern diese in großen Mengen vorhanden sind, zu entfernen.

Der zweiten Zone, in der das Auschmelzen und Homogenisieren der Mischungsbestandteile vorgenommen wird, folgt erfindungsgemäß eine Entgasungszone nach. In dieser Entgasungszone wird die Schmelze von störenden flüchtigen Bestanteilen befreit, da anderenfalls das ausgetragene flächige Gebilde häufig mit feinen Bläschen durchsetzt ist, die zu Inhomogenitäten und somit zu einem qualitätsmäßig schlechten Produkt führen. Die Entgasung der Schmelze ist daher insbesondere dann wichtig und muß dann mit großer Sorgfalt vorgenommen werden, wenn es auf hohe Homogenität und/oder optische Qualität, Klarheit und Transparenz des reaktiven flächigen Gebildes ankommt, wie es beispielsweise bei lichtempfindlichen Schichten für die Herstellung von lichtempfindlichen Bildaufzeichnungsmaterialien, beispeilsweise bei der Druckplattenherstellung, der Fall ist. Die Entgasung der Schmelze erfolgt im allgemeinen durch Anlegung eines geeigneten Unterdrucks an den Entgasungsstutzen, wobei Unterdruck und Temperatur in der Entgasungszone selbstverständlich so aufeinander abgestimmt sein sollen, daß nur die unerwünschten flüchtigen Bestandteile entfernt werden. So sollen selbstverständlich die niedrig-viskosen flüssigen Bestandteile, wie beispielsweise die Vernetzungspromotoren, durch die Entgasung nicht aus der Schmelze entfernt werden. Üblicherweise wird die Entgasungszone des Extruders auf Temperaturen (Heiztemperaturen des Extruders) zwischen 60 und 140°C, vorzugsweise zwischen 80 und 120°C gehalten. Neben der Entfernung der störenden flüchtigen Bestandteile aus der Schmelze wird in der Entgasungszone gleichzeitig für eine gute Längsmischung der Schmelze, beispielsweise durch Schnecken unterschiedlicher Steigung, gesorgt, um unvermeidliche Ungenauigkeiten und Schwankungen bei der Dosierung der Bestandteile wieder auszugleichen. Die Länge der Entgasungszone beträgt im allgemeinen das 2- bis 20-fache, vorzugsweise das 3- bis 8-fache des Schneckendurchmessers. Am Ende der Entgasungszone hat die homogene Schmelze die für den Austrag durch die Düse geeignete Temperatur.

Die mittlere Verweilzeit der Produkte in dem Extruder beträgt im allgemeinen 1 bis 6 Minuten, vorzugsweise zwischen 1,2 und 2,5 Minuten. Bei längeren Verweilzeiten besteht die Gefahr, anvernetzte bzw. thermisch geschädigte Produkte zu erhalten. Durch die gegenseitige Selbstreinigung der Schnecken wird das vorteilhafte enge Verweilzeitspektrum gewährleistet und damit ein Verkleben bzw. Verkrusten der Schneckenoberflächen verhindert. Der Einsatz der selbstreinigenden Schnecken trägt daher wesentlich zur Vermeidung von Inhomogenitäten in den reaktiven flächigen Gebilden bei.

Erfindungsgemäß wird die homogene Schmelze aus dem Extruder über eine Breitschlitzdüse ausgepreßt, die im allgemeinen ungefähr die Breite des herzustellenden reaktiven flächigen Gebildes hat. Erfindungsgemäß sind die Düsenlippen separat beheizt und sind vorzugsweise 10 bis 60°C wärmer als die Düsenmitte. Außerdem kann die Düse rechts und links höher temperiert werden als die Düsenmitte. Die homogene Schmelze verläßt die Breitschlitzdüse in Form eines endlosen flächigen Gebildes, dessen Dicke durch die Öffnung der Düsenlippen bestimmt wird. Die Öffnung der Düsenlippen ist auf die jeweils gewünschte Dicke des extrudierten reaktiven flächigen Gebildes abzustimmen. Da die eigentliche Dickeneinstellung des reaktiven flächigen Gebildes durch das dem Extruder nachgeschaltete Walzenpaar erfolgt, ist die Dicke des Extrudates in relativ weiten Grenzen unabhänig von der gewünschten Dicke des fertigen reaktiven flächigen Gebildes. Erfindungsgemäß ist das Extrudat jedoch etwa 10 bis 40 % dicker, als das herzustellende flächige Gebilde. Es versteht sich von selbst, daß die Verfahrensbedingungen in dem Extruder insgesamt so gewählt werden, daß die Mischungsbestandteile keine Schädigung erleiden und nicht bereits bei der Verarbeitung abreagieren, so daß ein einwandfreies reaktives flächiges Gebilde erhalten wird. Das die Breitschlitzdüse verlassende Extrudat wird erfindungsgemäß auf dem kürzesten Weg sofort zur Einstellung der gewünschten Dicke bei gleichzeitiger hoher Dickengenauigkeit und -konstanz durch den Spalt eines Walzenpaares geführt. Dies geschieht üblicherweise derart, daß das Material vor dem Walzenspalt einen rotierenden Wulst bildet, wobei die jeweils eingestellte Walzenspaltöffnung die Dicke des reaktiven flächigen Gebildes gibt. Eine eventuell auftretende Strangaufweitung des flächigen Gebildes nach Verlassen des Walzenspaltes kann beim Einstellen des Walzenabstandes berücksichtigt werden.

Vorzugsweise werden Walzen verwendet, deren Durchmesser größer als das 20-fache der Dicke des reaktiven flächigen Gebildes ist. Die Walzen, dei beheizt oder gekühlt werden können, können eine zylindrische Form haben oder gegebenenfalls bombiert sein. Die Achsen der Walzen sind parallel oder gegebenenfalls in Ebene der Fahrtrichtung in einem leichten Winkel zueinander gestellt, so daß der Walzenspalt in der Mitte am kleinsten ist. Bei dem Walzenpaar kann es sich um einen üblichen Zweiwalzenstuhl oder Kalander handeln.

Das reaktive flächige Gebilde wird bei der Dickeneinstellung zwischen den Walzen bei einer solchen Temparatur verarbeitet, bei der es noch plastisch verformbar ist. Die Temperatur der Breitschlitzdüse sowie die Temperatur im Walzenspalt sind daher in geeigneter Weise aufeinander abzustimmen. Die Drehgeschwindigkeit des Walzenpaares richtet sich nach der Geschwindigkeit, mit der das reaktive flächige Gebilde aus der Breitschlitzdüse extrudiert wird. Da bei der erfindungsgemäßen Verfahrensweise der Walzenspalt geringer ist als der Spalt der Breitschlitzdüse, muß die Geschwindigkeit, mit der das reaktive flächige Gebilde im Walzenspalt geformt und von dem Walzenpaar abtransportiert wird, größer sein als die Austrittsgeschwindigkeit des Extrudates aus der Breitschlitzdüse. Für die angestrebte dickengenaue und dickenkonstante Einstellung des reaktiven flächigen Gebildes ist es dabei entscheidend, daß sich vor dem Walzenspalt ein rotierender Wulst aus dem zu verarbeitenden Material ausbildet. Der Wulst soll dabei vorzugsweise möglichst klein gehalten werden.

Die Walzen können von mitlaufenden Folien aus z.B. Kunststoff oder Metall umschlungen sein, die kontinuierlich mit in den Walzenspalt einlaufen und die hinter dem Walzenspalt wieder von dem reaktiven flächigen Gebilde abgezogen werden. Diese Arbeitsweise empfiehlt sich besonders dann, wenn das eingesetzte thermoplastisch verarbeitbare Polymer ohne das Ergreifen besonderer Vorkehrungen an den Walzen haften bzw. kleben würde, so daß dadurch eine Schädigung des flächigen Gebildes hervorgerufen würde. in diesem Fall werden vorzugsweise Folien aus solchem Material mit durch den Walzenspalt geführt, die sich nachher wieder leicht von dem reaktiven flächigen Gebilde abziehen lassen, z.B. silikonisiertes Papier oder silikonisierte Kunststoff-Folien.

Das fertig geformte reaktive flächige Gebilde mit hoher Dickengenauigkeit und -konstanz bei Schichtdicken im allgemeinen im Bereich von 10 μm bis 6 mm wird nach dem Verlassen des Walzenspaltes vorzugsweise auf ein mitlaufendes Band gegeben und kann dann nach hinreichender Abkühlung entweder aufgewickelt oder im gewünschten Format abgeschnitten werden. Ebenso kann nach dem Verlassen des Walzenspaltes das reaktive flächige Gebilde in üblicher Weise an den Rändern beschnitten werden, um flächige Gebilde von einheitlicher bestimmter Breite zu erhalten.

Erfindungsgemäß wird dabei das den Walzenspalt verlassende reaktive flächige Gebilde mit einem über zwei Umlenkwalzen umlaufenden Band weggefördert, wobei dieses Band erfindungsgemäß perforiert ist. Unter dem perforierten Band befindet sich erfindungsgemäß ein Vakuumkasten, der die untere Folie auf das Band

EP 0 080 665 B2

zieht. Damit kann, falls gewünscht, mit dem Band eine Zugkraft auf das den Walzenspalt verlassende flächenförmige Gebilde ausgeübt werden.

Nach dem erfindungsgemäßen Verfahren ist es nicht nur möglich, reaktive flächige Gebilde mit hoher Dickengenauigkeit und -konstanz als solche, wie beispielsweise Filmen, Folien oder Platten, herzustellen, sondern es werden auch Mehrschichtenelemente hergestellt, deren eine Schicht aus der reaktiven Polymermasse besteht. Hierzu wird erfindungsgemäß das auf dem perforierten Band abtransportierte flächige Gebilde, unmittelbar nach Verlassen des Walzenspaltes, teilvernetzt, indem man es von einer Seite vollflächig derart mit aktinischem Licht bestrahlt, daß die Schicht nur zu einem Teil ihrer Dicke vernetzt wird und der belichtete vernetzte Teil gleichzeitig als Träger für den noch reaktiven Schichtteil des flächigen Gebildes dient. Ebenso kann man gleichzeitig mit dem extrudierten flächigen Gebilde eine dimensionsstabile Folie, beispielsweise aus Kunststoff oder Metallblech (als spätere Trägerschicht des Mehrschichtenelementes) sowie gegebenenfalls eine weitere Kunststoff-Folie (als spätere Deckschicht des Mehrschichtenelementes) mit in den Walzenspalt einlaufen lassen, wobei die Folien und das reaktive flächige Gebilde haftfest miteinander verbunden werden. Solche Mehrschichtenelemente eignen sich beispeilsweise als lichtempfindliche Bildaufzeichnungsmaterialien, wenn als Vernetzungshilfsmittel Photopolymerisationsinitiatoren eingesetzt werden und die Mischungsbestandteile miteinander verträglich. Zur Bildaufzeichnung können derartige lichtempfindliche Mehrschichtenelemente in an sich bekannter Weise bildmäßig mit aktinischem Licht belichtet und die unbelichteten und unvernetzten Schichtanteile anschließend entfernt werden. Mehrschichtenelemente, bei denen die reaktive Polymerschicht eine Dicke von 0,01 bis etwa 6 mm hat, eignen sich auf diese Weise zur Herstellung beispeilsweise von Reliefformen oder Druckplatten.

Mit dem erfindungsgemäßen Verfahren können reaktive flächige Gebilde beliebiger Formate und beliebiger Dicken in einfacher und wirtschaftlicher Weise weitgehend ohne Abfall hergestellt werden. Die reaktiven flächigen Gebilde werden dabei, ausgehend von den Ausgangskomponenten, in einem Arbeitsgang bei minimaler thermischer Belastung erhalten, ohne daß Zwischenprodukte anfallen und gehandhabt werden müssen. Im Vergleich zu den bekannten diskontinuierlichen Verfahrensweisen kommt man ohne aufwendige Vormischapparaturen aus und erhält Produkte mit größerer Produktgleichheit und Reproduzierbarkeit. Wegen der geringen thermischen Belastung können in dem erfindungsgemäßen Verfahren im Gegensatz zu den herkömmlichen Methoden auch thermisch labile Produkte ohne Nachteil eingesetzt werden. Die Dicke der reaktiven flächigen Gebilden ist nach dem erfindungsgemäßen Verfahren leicht in weiten Grenzen variierbar und richtet sich nach dem jeweiligen Anwendungszweck.

Neben hoher Dickengenauigkeit und -konstanz zeichnen sich die erfindungsgemäß hergestellten reaktiven flächigen Gebilde trotz der im Extruder vorhandenen kurzen Mischzeiten durch eine ausgezeichnete Homogenität aus.

Die reaktiven flächigen Gebilde können dabei durch nachträgliche Reaktion, beispeilsweise durch Erwärmen oder Bestrahlen in dimensionsstabile, gegenüber mechanischen und chemischen Einflüssen sehr beständige flächige Gebilde hoher Dickengenauigkeit überführt werden und eignen sich daher für Anwendungsgebiete, wie sie eingangs beschrieben worden sind. Hierzu zählen beispeilsweise neben der bereits erwähnten Herstellung von Reliefformen und Reliefdruckplatten die Beschichtung von Walzen, bei denen hohe Rundlaufgenauigkeiten gefordert werden, die Herstellung von Endlosbändern für Flüssigbeschichtungen, Unterlagen, beispeilsweise für Druckplatten, zum genauen Dickenausgleich, Trägerschichten, Dichtungen, Verpackungsmaterialien etc.

Die Erfindung wird durch die nachfolgenden Beispiele näher erläutert. Die in den Beispeilen genannten Teile und Prozente beziehen sich, sofern nicht anders angegeben, auf das Gewicht.

Beispiele 1 bis 3

In diesen Beispielen wurde ein Zweischneckenextruder mit drei Zonen eingesetzt. Der Schneckendurchmesser betrug 53 mm, die Gesamtlänge der Schecken 35 D. Die Schneckendrehzahl richtete sich nach dem zu verarbeitenden Produkt.

Zone 1 des Extruders hatte in der Mitte eine Einspeiseöffnung für feste Substanzen und war mit förderwirksamen Schneckenelementen ausgestaltet. In der ersten Hälfte der in mehreren Abschnitten temperierbaren Zone 2 wurden die flüssigen Substanzen zudosiert. Am Ende der Zone 2 befand sich eine Entgasungsöffnung. Die Schnecken in dieser Zone waren mit Knetscheiben ausgestattet. Zone 3 des Extruders besaß in ihrer ersten Hälfte eine Entgasungsöffnung, durch die mittels einer Vakuumpumpe flüchtige Bestandteile abgesaugt wurden.

Die Schmelze wurde über eine 250 mm breite Breitschlitzdüse ausgetragen, die je nach gewünschter Dicke des flächigen Gebildes variiert wurden. Die Düse war temperierbar, wobei die angegebenen Temperaturen die Temperaturen der Düsenmitte sind.

9

Das die Breitschlitzdüse waagerecht verlassende flächige Gebilde wurde zwischen die Walzen eines Zweiwalzenkalanders gegeben. Die Walzen wurden von einer oberen und einer unteren Folie umschlungen. Die Walzen drehten sich gleich schnell unter Ausbildung eines rotierenden Massewulstes vor dem Walzenspalt.

Das den Walzenspalt verlassende reaktive flächige Gebilde wurde mittels eines Stahlabzugsbandes abtransportiert. Das Stahlband war perforiert; das endlose flächige Gebilde wurde durch einen unter dem perforierten Band liegenden Vakuumkasten an das Stahlband angezogen. Die Geschwindigkeiten des Stahlbandes und des Kalanders waren synchronisiert.

Im einzelnen wurde unter den in der Tabelle 1 angegebenen Bedingungen gearbeitet. Es wurden in allen Fällen sehr homogene reaktive Platten mit hoher Dickengenauigkeit erhalten.

## Beispiel 4

Es wurde in einem Zweischneckenextruder entsprechend wie in den Beispielen 1 bis 3 gearbeitet. Der Extruder hatte diesmal jedoch eine Schneckenlänge von insgesamt 47 D und Zone 2 besaß in ihrer ersten Hälfte 2 Öffnungen für die Zudosierung von flüssigen Substanzen.

Die homogene Schmelze wurde wie in den Beispielen 1 bis 3 über eine Breitschlitzdüse extrudiert und direkt einem Zweiwalzenkalander zugeführt. Die Breite der Breitschlitzdüse betrug diesmal 750 mm.

Das den Walzenspalt verlassende reaktive flächige Gebilde wurde wie in den Beispielen 1 bis 3 abgezogen, zeigte sehr große Homogenität und ausgezeichnete Dickenkonstanz. Die Arbeitsbedingungen von Beispiel 4 sind in Tabelle 2 wiedergegeben.

## Beispiel 5

Es wurde wie in Beispiel 4 beschrieben gearbeitet, in dem Extruder wurden diesmal jedoch folgende Substanzen gemischt:

56 Teile eines Styrol/Isopren/Styrol-Dreiblockcopolymeren (mit 15 % Styrolanteil), 32 Teile eines Weißöles, welches 60 % paraffinisch gebundenen und 40 % naphthenisch gebundenen Kohlenstoff enthielt, 4 Teile Butandioldiacrylat, 4 Teile Butandioldimethacrylat, 3 Teile Hexandioldiacrylat, 0,7 Teile Benzildimethylketal, 0,001 Teil eines schwarzen Farbstoffes (C.I. 26150, Solvent Black 3) und 0,6 Teile 2,6-Di-tert.-butylkresol.

Die über die Breitschlitzdüse extrudierte homogene Schmelze wurde in dem Walzenspalt des Zweiwalzenkalanders zwischen zwei Polyesterfolien zu einer 2 mm dicken endlosen Platte geformt. Unmittelbar hinter den Walzen wurde die Platte mit 40 Watt-UV-Fluoreszenzlampe vollflächig belichtet. Es wurde eine außerordentlich elastische, sehr transparente und dimensionshaltige Platte erhalten, die sich hervorragend als elastomere Trägerschicht für Druckplatten eignet und sich durch geringe Anquellbarkeit und Plastizität auszeichnet.

## Beispiel 6

Es wurde wie in Beispiel 4 beschrieben gearbeitet, diesmal wurden jedoch folgende Substanzen gemischt:

50 Teile eines Styrol/Isopren/Styrol-Dreiblockcopolymeren, 10 Teile eines Styrol/Butadien/Styrol-Dreiblockcopolymerisats, 25 Teile des Weißöls gemäß Beispiel 6, 3 Teile eines Butadienöls mit einem Molekulargewicht von 1 300, 5 Teile Hexandioldiacrylat, 5 Teile Hexandioldimethacrylat, 0,4 Teile Benzildimethylketal und 0,7 Teile 2,6-Di-tert.-butylkresol.

Die über die Breitschlitzdüse ausgetragene homogene Schmelze wurde in dem Zweiwalzenextruder zu einer 1,5 mm dicken Schicht geformt. Das so erzeugte reaktive flächige Gebilde wurde unmittelbar nach dem Verlassen des Walzenspaltes mit 40 Watt-UV-Fluoreszenzlampen vollflächig belichtet. Es wurde eine sehr elastische, hochtransparente, als Trägerschicht sehr geeignete Platte erhalten.

Wurde aus den Komponenten von Beispiel 5 bzw. Beispiel 6 durch Gießen aus toluolischer Lösung und Trocknen eine entsprechende reaktive Schicht hergestellt und diese in gleicher Weise wie in Beispielen 5 und 6 belichtet, wurden trübere Platten erhalten, die nach dem Belichten noch eine relativ hohe Plastizität zeigten. In diesen Fällen konnte erst durch längere Belichtungszeiten eine Plastizitätsabnahme der Platten erzielt werden.

Entsprechende weichelastische, transparente Platten mit hoher Dimensionsgenauigkeit und -haltigkeit und analogen Eigenschaften wie in Beispielen 5 und 6, die sich hervorragend als Trägerschichten für Druckplatten bzw. weichelastische Unterlagen für Druckklischees eignen, erhält man auch, wenn man gemäß der Verfahrensweise von Beispielen 5 und 6 arbeitet, jedoch andere Blockcopolymere aus Styrol und Dien, beispielsweise 2-Blockcopolymere, 3-Blockcopolymere des Typs ABC oder 4-Blockcopolymere, oder auch alpha-methylstyrolhaltige Blockcopolymerisate einsetzt. In gleicher Weise können auch andere (Meth)acrylat-verbindungen als Vernetzungshilfsmittel oder andere Vernetzungspromotoren verwendet werden. Als Weichmacher eignen sich alle mit den Copolymerisaten verträglichen, bekannten pareffinischen und/oder naphthenischen Öle, vorzugsweise mit einer Viskosität bei 20°C von 85 bis 3000 cSt.

Beispiel 7

Entsprechend der Arbeitsweise von Beispiel 4 wurden in dem Extruder diesmal folgende Komponenten gemischt und das Extrudat in dem Zweiwalzenkalander zu einem reaktiven flächen Gebilde von 1,7 mm Dicke geformt:

66,5 Teile eines Butadien-Acrylnitril-Copolymerisat (Acrylnitril-Gehalt 29 %), 20 Teile Di-(n-butyl)-phthalat, 6 Teile Butandioldiacrylat, 6 Teile Butandioldimethacrylat, 1 Teil Benzildimethylketal und 0,5 Teile 2,4-Di-tert.-butyl-kresol.

Das erhaltene endlose flächige Gebilde wurde sofort hinter dem Kalander von von einer Seite her vollflächig mit einer 40 Watt-UV-Fluoreszenzlampe so lange bestrahlt, daß die Schicht bis in etwa 1 mm Tiefe vernetzt wurde und eine etwa 0,7 mm dicke Restschicht unvernetzt blieb. Die so erhaltene Platte eignete sich hervorragend als Flexodruckplatte zur Herstellung von weichelastischen Druckformen hoher Elastizität sowie geringer Plastizität und Anquellbarkeit.

Beispiel 8

Entsprechend der Arbeitsweise von Beispiel 4 wurden in dem Extruder diesmal folgende Komponenten gemischt und die extrudierte Schmelze in dem Zweiwalzenkalander zu einem reaktiven flächigen Gebilde einer Dicke von 1,7 mm geformt:

58 Teile eines Butadien-Acrylnitril-Copolymerisats (mit 33 % Acrylnitril), 30 Teile Di-(2-ethylhexyl)-phthalat, 6 Teile Hexandioldiacrylat, 5 Teile Hexandioldimethacrylat, 0,7 Teile Benzildimethylketal und 0,3 Teile 2,6-Di-tert.-butyl-kresol.

Das so erzeugte reaktive flächige Gebilde wurde unmittelbar hinter dem Kalander mit einer 40 Watt-UV-Fluoreszenzlampe 6 Minuten belichtet und war danach völlig vernetzt. Die erhaltene Platte von hoher Transparenz und Elastizität sowie geringer Plastizität und Anquellbarkeit eignete sich vorteilhaft als weichelastische Unterschicht, Dichtungsmaterial, zur Walzenbeschichtung oder als Verpackungsmaterial.

Ensprechende weichelastische, transparente Platten hoher Dimensionsgenauigkeit und -haltigkeit und mit analogen Eigenschaften wie in den Beispielen 7 und 8 werden auch erhalten, wenn gemäß der Verfahrensweise von Beispielen 7 und 8 gearbeitet wird, jedoch andere Dien-Acrylnitril-Kautschuke, beispielsweise von konjugierten Dienen mit 4 bis 10 C-Atome oder carboxylgruppenhaltige Nitrilkautschuke, andere Vernetzungshilfsmittel und/oder -promoteren und/oder andere verträgliche Weichmacher eingesetzt werden. Als Weichmacher eignen sich hierbei insbesondere alle mit den Kautschuken verträglichen, bekannten Estergruppen-haltigen Weichmacher mit einem Schmelzpunkt unter 50°C und einem Siedepunkt über 200°C, wie z.B. die Diester von aliphatischen, cycloaliphatischen oder aromatischen Dicarbonsäuren und aliphatischen, cycloaliphatischen und/oder araliphatischen Monoalkoholen, wobei die Alkohole auch substituiert sein können, wie z.B. im Di(methoxyethanol)phthalat, oder die Diester von aliphatischen, cycloaliphatischen oder aromatischen Diolen mit entsprechenden Monocarbonsäuren.

EP 0 080 665 B2

Tabelle 1

|  | Beispiel 1 | Beispiel 2 | Beispiel 3 |
|---|---|---|---|
| Schnecken-drehzahl | 70 Upm | 100 Upm | 75 Upm |
| Zone 1 | 20°C | 20°C | 20°C |
| Dosierung | a) 20 Teile IS | 25 Teile BAN | 40 Teile BAN |
|  | b) 2 Teile MS-Cop. |  |  |
| Zone 2 | 120-180°C | 150-170°C | 150-170°C |
| Dosierung | 2 Teile HDA | 3 Teile HDA | a) 5 Teile TPA |
|  | 0,3 Teile HDMA | 1 Teil HDMA | b) 1,5 Teile Ethanol |
|  | 0,21 Teile BDMK | 0,5 Teile TPMA | 0,5 Teile Benzophenon |
|  |  | 0,1 Teile BDMK | 0,005 Teile Farbstoff |
|  |  | 2 Teile Weichmacher |  |

Tabelle 1 Forts.

|  | Beispiel 1 | Beispiel 2 | Beispiel 3 |
|---|---|---|---|
| Druck (Ent-gasung) | — | — | 300 mbar |
| Zone 3 | $140^{\circ}$C | $110^{\circ}$C | $110^{\circ}$C |
| Druck (Ent-gasung) | 700 mbar | 500 mbar | 300 mbar |
| Düse | $140^{\circ}$C | $145^{\circ}$C | $145^{\circ}$C |
| Spaltbreite | 3,5 mm | 6,5 mm | 3,5 mm |
| Kalander | $70^{\circ}$C | $20^{\circ}$C | $40^{\circ}$C |
| Spaltbreite | 2,75 mm | 5,6 mm | 2,85 mm |

EP 0 080 665 B2

Tabelle 2

| | Beispiel 4 |
|---|---|
| Zone 1 | 20-40°C |
| Dosierung | a) 15 Teile SBS |
| | b) 15 Teile SIS |
| Zone 2 | 130-160°C |
| Dosierung | a) 3 Teile DDA |
| | 0,3 Teile BDMK |
| | 0,05 Teile Inhibitor |
| | b) 3 Teile Weißöl |
| Zone 3 | 80-120°C |
| Druck (Entgasung) | 200 mbar |
| Düse | 120°C |
| Spaltbreite | 3,5 mm |
| Kalander | 60°C |
| Spaltbreite | 2,7 mm |

Fußnote Tabellen 1 und 2

Dien angegebenen Temperaturen sind Heiztemperaturen der Vorrichtung.

| PUR: | Polyurethan-Elastomer |
|---|---|
| HDA: | Hexandioldiacrylat |
| HDMA: | Hexandioldimethacrylat |
| BDMK: | Benzildimethylketal |
| IS: | Polystyrol-Polyisopren-Zweiblockcopolymerisat |
| MS-Cop: | α-Methylstyrol/Vinyltoluol-Copolymerisat (Schmelzviskosität 35 Poise bei 140°C) |
| BAN: | Butadien-Acrylnitril-Kautschuk |
| TPMA: | Trimethylolpropantrimethacrylat |
| TPA: | Trimethylolpropantriacrylat |
| SBS: | Polystyrol-Polybutadien-Polystyrol-Blockcopolymer |
| SIS: | Polystyrol-Polyisopren-Polystyrol-Blockcopolymer |
| DDA: | Decandioldiacrylat |

**Patentansprüche**

1. Verfahren zur Herstellung eines bei Raumtemperatur festen, reaktiven flächigen Gebildes mit hoher Dickengenauigkeit und -konstanz aus einer Mischung von einem thermoplastisch verarbeitbaren Polymeren, einer niedrigviskosen ethylenisch ungesättigten Verbindung als Vernetzungspromotor, einem Vernetzungshilfsmittel sowie gegebenenfalls weiteren festen und/oder flüssigen Zusatzstoffen durch homogenes Vermischen der das reaktive flächige Gebilde bildenden Bestandteile, Extrudieren der Mischung und Formen des flächigen Gebildes mit der gewünschten Dicke durch Kalandrieren, bei dem man zunächst in einem selbstreinigenden Mehrschneckenextruder, in Produktflußrichtung gesehen, in einer ersten Zone des thermoplastisch

14

verarbeitbare Polymere und gegebenenfalls weitere, insbesondere feste Mischungsbestandteile bei einer Temperatur unterhalb der Schmelztemperatur des thermoplastisch verarbeitbaren Polymeren einspeist und fördert, dann in einer zweiten Zone, in der das thermoplastisch verarbeitbare Polymere aufgeschmolzen wird, zumindest die Hauptmenge der flüssigen, niedrigviskosen sowie alle gegebenenfalls weiteren Mischungsbestandteile zugibt und alle Mischungsbestandteile homogen vermischt, die homogene Schmelze in einer nachfolgenden Entgasungszone von störenden flüchtigen Bestandteilen befreit und danach die entgaste Schmelze über eine Breitschlitzdüse aus dem Extruder austrägt, anschließend direkt das extrudierte flächige Gebilde zur Einstellung der gewünschten Dicke mit einer Temperatur durch den Spalt eines Walzenpaares führt, bei der das flächige Gebilde unter den Verarbeitungsbedingungen zumindest teilweise irreversibel verformbar ist, wobei man das durch die Breitschlitzdüse extrudierte flächige Gebilde dem Walzenpaar mit einer solchen Geschwindigkeit zuführt, daß sich im Walzenspalt ein Massewulst bildet, dadurch gekennzeichnet, daß

    a) die Düsenlippen der Breitschlitzdüse separat beheizt und 10 bis 60°C wärmer als die Düsenmitte sind,

    b) das extrudierte flächige Gebilde 10 bis 40 % dicker ist als das hieraus herzustellende feste, reaktive flächige Gebilde,

    c) man das den Walzenspalt verlassende reaktive flächige Gebilde mit einem umlaufenden perforierten Band, auf welches das reaktive flächige Gebilde über einen Träger oder eine untere mitgeführte Folie mit Hilfe eines Vakuumskastens aufgezogen wird, wegfördert und daß

    d) man das reaktive flächige Gebilde unmittelbar nach dem Verlassen des Walzenspaltes oder beim Abtransport mit einem Band durch vollflächiges Bestrahlen mit aktinischem Licht nur zu einem Teil seiner Dicke oder vollständig vernetzt.

2. Das Verfahren nach Anspruch 1, dadurch gekennzeichnet, daß mit dem perforierten Band eine Zugkraft auf das den Walzenspalt verlassende reaktive flächige Gebilde ausgeübt wird.

3. Das Verfahren nach Anspruch 1 oder 2, dadurch gekennzeichnet, daß man in einer zweiwelligen Knetscheibenschneckenpresse mit selbstreinigenden, gleichsinnig drehenden Schnecken arbeitet.

4. Das Verfahren nach einem der Ansprüche 1 bis 3, dadurch gekennzeichnet, daß die flüssigen, niedrigviskosen Mischungsbestandteile innerhalb der ersten zwei Drittel der 2. Zone des Extruders zudosiert werden.

5. Das Verfahren nach einem der Ansprüche 1 bis 4, dadurch gekennzeichnet, daß die Temperaturen der Entgasungszone des Extruders 60 bis 140°C betragen.

6. Das Verfahren nach einem der Ansprüche 1 bis 5, dadurch gekennzeichnet, daß die erste Zone des Extruders eine Länge des 2- bis 10-fachen des Schneckendurchmessers, die zweite Zone eine Länge des 10- bis 50-fachen des Schneckendurchmessers und die Entgasungszone eine Länge des 2- bis 20-fachen des Schneckendurchmessers aufweist.

7. Das Verfahren nach einem der Ansprüche 1 bis 6, dadurch gekennzeichnet, daß die mittlere Verweilzeit des thermoplastisch verarbeitbaren Polymeren im Extruder zwischen 1 und 6 min, vorzugsweise zwischen 1,2 und 2,5 min, liegt.

8. Das Verfahren nach einem der Ansprüche 1 bis 7, dadurch gekennzeichnet, daß das reaktive flächenförmige Gebilde nach dem Verlassen des Walzenspaltes eine Schichtdicke im Bereich von etwa 10 $\mu$m bis 6 mm hat.

9. Das Verfahren nach einem der Ansprüche 1 bis 8, dadurch gekennzeichnet, daß man zusammen mit dem extrudierten flächigen Gebilde auf einer oder beiden Seiten des flächigen Gebildes eine Folie durch den Walzenspalt mitführt.

10. Verfahren nach einem der Ansprüche 1 bis 9, dadurch gekennzeichnet, daß man zusammen mit dem extrudierten flächigen Gebilde auf mindestens einer Seite des flächigen Gebildes einen gegebenenfalls mit einem Haftvermittler substrierten Träger durch den Walzenspalt mitführt.

## Claims

1. A process for the production of a reactive sheetlike structure which is solid at room temperature and of highly uniform thickness, from a mixture of a thermoplastically processable polymer, a low-viscosity ethylenically unsaturated compound as the crosslinking promoter and a crosslinking assistant, with or without further solid and/or liquid additives, by homogeneously mixing the components forming the reactive sheetlike structure, extruding the mixture and shaping the sheetlike structure to the desired thickness by calendering, in which, first of all, the thermoplastically processable polymer, with or without additional, in particular solid, constituents of the mixture, is fed into a first zone - viewed in the direction of product flow - of a self-cleaning multi-screw extruder at a temperature below the melting point of the thermoplastically processable polymer, and conveyed into a second zone in which the thermoplastically processable polymer is melted and into which all, or the greater part, of the liquid, low-viscosity constituents of the mixture, and any other constituents which may be used, are then fed, all constituents of the mixture being homogeneously mixed in said zone; the homogeneous melt is freed from undesirable volatile constituents in a downstream devolatilizing zone, after which the devolatilized melt is discharged from the extruder through a slot die; and then, in order to obtain the desired thickness, the extruded sheetlike structure is passed directly through the nip of a pair of rolls at a temperature at which the sheetlike structure is at least partially irreversibly deformable under the processing conditions; and in which the sheetlike structure extruded through the slot die is fed to the pair of rolls at such a speed that a bank of material forms in front of the nip, wherein

a) the lips of the slot die are separately heated and are from 10 to 60°C hotter than the midpoint of the die,

b) the extruded sheetlike structure is from 10 to 40% thicker than the solid, reactive sheetlike structure to be produced therefrom,

c) the reactive sheetlike structure leaving the nip is carried away by a circulating perforated belt, onto which the reactive sheetlike structure is pulled via a carrier or a lower, co-transported film with the aid of a vacuum box, and

d) the reactive sheetlike structure is crosslinked to only part of its thickness or completely by uniform irradiation with actinic light immediately upon leaving the nip or in the course of being transported away by means of a belt.

2. A process as claimed in claim 1, wherein the perforated belt exerts a pulling force on the reactive sheetlike structure leaving the nip.

3. A process as claimed in claim 1 or 2, wherein a twin-screw extruder provided with kneading discs and having self-cleaning screws rotating in the same direction is employed.

4. A process as claimed in any of claims 1 to 3, wherein the liquid low-viscosity constituents of the mixture are fed into the first two-thirds of the 2nd zone of the extruder.

5. A process as claimed in any of claims 1 to 4, wherein the temperature of the devolatilizing zone of the extruder is from 60 to 140°C.

6. A process as claimed in any of claims 1 to 5, wherein the first zone of the extruder has a length which is from 2 to 10 times the screw diameter, the second zone has a length which is from 10 to 50 times the screw diameter, and the devolatilizing zone has a length which is from 2 to 20 times the screw diameter.

7. A process as claimed in any of claims 1 to 6, wherein the mean residence time of the thermoplastically processable polymer in the extruder is from 1 to 6, preferably from 1. 2 to 2. 5, minutes.

8. A process as claimed in any of claims 1 to 7, wherein the reactive sheetlike structure, after leaving the nip, has a thickness of from about 10 $\mu$m to 6 mm.

9. A process as claimed in any of claims 1 to 8, wherein a film, on one or both sides of the extruded sheetlike structure, is fed together with the latter through the nip.

10. A process as claimed in any of claims 1 to 9, wherein a support which may or may not have been coated with an adhesive is fed together with the extruded sheetlike structure, on one or both sides thereof, through the nip.

## Revendications

1. Procédé de fabrication d'un produit plat, réactif, solide à température ordinaire, à grandes constance et précision d'épaisseur, à partir d'un mélange d'un polymère susceptible d'être travaillé thermoplastiquement, d'un composé insaturé éthyléniquement, à faible viscosité, comme promoteur de réticulation, d'un auxiliaire de réticulation ainsi qu'éventuellement d'autres additifs solides et/ou liquides, par mélange homogène des constituants formant le produit plat réactif, extrusion du mélange et mise en forme du produit plat à l'épaisseur voulu par calandrage dans lequel, d'abord dans une boudineuse auto-nettoyante à vis multiple, on introduit et fait avancer dans une première zone, en suivant le sens de circulation du produit, le polymère susceptible d'être travaillé thermoplastiquement, à une température inférieure à la température de fusion dudit polymère, et éventuellement d'autres constituants de mélange, en particulier solides, puis, dans une deuxième zone, dans laquelle le polymère traitable thermoplastiquement est fondu, on ajoute au moins la majeure partie des constituants du mélange liquide, peu visqueux, ainsi qu'éventuellement d'autres, on mélange de façon homogène tous les constituants du mélange, on débarasse la masse fondue homogène, dans une zone de dégazage suivante, des constituants volatils gênants, et ensuite on fait sortir de la boudineuse la masse fondue dégazée par une filière à large fente (filière plate) et enfin on fait passer directement le produit plat extrudé, pour régler l'épaisseur à la valeur voulue, par l'espace compris entre deux cylindres, à une température à laquelle le produit plast est déformable de façon au moins partiellement irréversible dans les conditions de travail, et on amène le produit plat, extrudé par la filière plate, à la paire de cylindres à une vitesse telle qu'il se forme un bourrelet de matière entre lesdits cylindres, caractérisé par le fait que

a) les lèvres de la filière plate sont chauffées séparément et sont de 10 à 60 degrés C plus chaudes que le centre de la filière,

b) le produit plat extrudé est de 10 à 40 % plus épais que le produit plat réactif, solide qui en résulte,

c) on entraîne le produit plat réactif quittant l'espace entre cylindres, par une bande perforée circulante, sur laquelle le produit plat, réactif, est soulevé, à l'aide d'une caisse à vide, au-dessus d'un support ou d'une feuille entraînée dessous,

d) on réticule seulement sur une partie de son épaisseur ou totalement le produit plat réactif, directement après qu'il ait quitté l'espace entre cylindres ou lors de son entraînement par une bande, par irradiation bien à plat par de la lumière actinique.

2. Procédé selon la revendication 1, caractérisé par le fait que par la bande perforée est exercée une force de traction sur le produit plat, réactif, quittant l'espace entre cylindres.

3. Procédé selon la revendication 1 ou 2, caractérisé par le fait que l'on travaille dans une presse malaxeuse à disques hélicoïdaux et deux arbres, à vis autonettoyantes tournant dans le même sens.

4. Procédé selon l'une des revendications 1 à 3, caractérisé par le fait que les constituants de mélange liquides, peu visqueux sont complètement dosés dans les premiers deux tiers de la deuxième zone de la boudineuse.

5. Procédé selon l'une des revendications 1 à 4, caractérisé par le fait que les températures de la zone de dégazage de la boudineuse sont comprises entre 60 et 140 degrés C.

6. Procédé selon l'une des revendications 1 à 5, caractérisé par le fait que la première zone de la boudineuse a une longueur de 2 à 10 fois le diamètre de la vis, la deuxième zone, une longueur de 10 à 50 fois le diamètre de la vis et la zone de dégazage, une longueur de 2 à 20 fois le diamètre de la vis.

7. Procédé selon l'une des revendications 1 à 6, caractérisé par le fait que la durée de séjour moyenne du polymère traitable thermoplastiquement dans la boudineuse est comprise entre 1 et 6 minutes, de préférence entre 1,2 et 2,5 minutes.

8. Procédé selon l'une des revendications 1 à 7, caractérisé par le fait que le produit plat réactif possède, après avoir quitté l'espace entre cylindres, une épaisseur de couche comprise entre environ 10 um et 6 mm.

9. Procédé selon l'une des revendications 1 à 8, caractérisé par le fait qu'avec le produit plat extrudé on fait passer entre les cylindres une feuille placée sur l'une ou les deux faces de ce produit plat.

10. Procédé selon l'une des revendications 1 à 9, caractérisé par le fait qu'avec le produit plas extrudé, on fait passer, entre les cylindres, un support, éventuellement pourvu d'un agent d'adhérence.